Europäisches Patentamt

(19) European Patent Office

Office européen des brevets

(11) Publication number: **0 097 296 B1**

(12) **EUROPEAN PATENT SPECIFICATION**

(45) Date of publication of patent specification: **30.12.86**

(21) Application number: **83105749.2**

(22) Date of filing: **11.06.83**

(51) Int. Cl.⁴: **G 01 T 1/202, C 09 K 11/77**

(54) Rare earth doped yttria-gadolinia ceramic scintillators and methods for making.

(30) Priority: **18.06.82 US 389812**
**18.06.82 US 389818**
**18.06.82 US 389817**
**18.06.82 US 389816**

(43) Date of publication of application:
**04.01.84 Bulletin 84/01**

(45) Publication of the grant of the patent:
**30.12.86 Bulletin 86/52**

(84) Designated Contracting States:
**DE FR GB NL**

(56) References cited:
**US-A-3 640 887**
**US-A-4 040 845**
**MATERIALS RESEARCH BULLETIN, vol. 7, no. 7, July 1972, pages 647-654, Pergamon Press, Inc., USA, E. CARNALL et al.: "Transparent Gd2O3 ceramics and phosphors"**
**THE AMERICAN CERAMIC SOCIETY BULLETIN, vol. 52, no. 5, May 1973, pages 473-478, USA, C. GRESKOVICH et al.: "Fabrication of transparent ThO2-doped Y2O3"**

(73) Proprietor: **GENERAL ELECTRIC COMPANY**
**1 River Road**
**Schenectady New York 12305 (US)**

(72) Inventor: **Cusano, Dominic Anthony**
**2017 Morrow Avenue**
**Schenectady New York 12309 (US)**
Inventor: **Greskovich, Charles David**
**1229 Viewmont Drive**
**Schenectady New York 12309 (US)**
Inventor: **DiBianca, Frank Anthony**
**818 Shady Lawn Road**
**Chapel Hill North Carolina 27514 (US)**

(74) Representative: **Catherine, Alain**
**General Electric - Deutschland Munich Patent Operations Frauenstrasse 32**
**D-8000 München 5 (DE)**

EP 0 097 296 B1

## Description

The present invention relates to rare-earth doped ceramic scintillators for computerized tomography (CT) and other x-ray, gamma radiation, and nuclear radiation detecting applications. More specifically, the invention relates to rare-earth-doped, polycrystalline, yttria/gadolinia ($Y_2O_3/Gd_2O_3$) ceramic scintillators.

Computerized tomography scanners are medical diagnostic instruments in which the subject is exposed to a relatively planar beam or beams of x-ray radiation, the intensity of which varies in direct relationship to the energy absorption along a plurality of subject body paths. By measuring the x-ray intensity (i.e., the x-ray absorption) along these paths from a plurality of different angles or views, an x-ray absorption coefficient can be computed for various areas in any plane of the body through which the radiation passes. These areas typically comprise approximately a square portion of about 1 mm×1 mm. The absorption coefficients are used to produce a display of, for example, the bodily organs intersected by the x-ray beam.

An integral and important part of the scanner is x-ray detector which receives the x-ray radiation which has been modulated by passage through the particular body under study. Generally, the x-ray detector contains a scintillator material which, when excited by the impinging x-ray radiation, emits optical wavelength radiation. In typical medical or industrial CT applications, the optical output from the scintillator material is made to impinge upon photoelectrically responsive materials in order to produce electrical output signals, the amplitude of which is directly related to the intensity of the impinging x-ray radiation. The electrical signals are digitized for processing by digital computer means which generates the absorption coefficients in a form suitable for display on a cathode ray tube screen or other permanent media.

Due to the specific and demanding computerized tomography requirements, not all scintillator materials which emit optical radiation upon excitation by x-ray or gamma ray radiation are suitable for CT applications. Useful scintillators must be efficient converters of x-ray radiation into optical radiation in those regions of the electromagnetic spectrum (visible and near visible) which are most efficiently detected by photosensors such as photomultipliers or photodiodes. It is also desirable that the scintillator transmit the optical radiation efficiently, avoiding optical trapping, such that optical radiation originating deep in the scintillator body escapes for detection by externally situated photodetectors. This is particularly important in medical diagnostic applications where it is desirable that x-ray dosage be as small as possible to minimize patient exposure, while maintaining adequate quantum detection efficiency and a high signal-to-noise ratio.

Among other desirable scintillator material properties are short afterglow or persistence, low hysteresis, high x-ray stopping power, and spectral linearity. Afterglow is the tendency of the scintillator to continue emitting optical radiation for a time after termination of x-ray excitation, resulting in blurring, with time, of the information-bearing signal. Short afterglow is also highly desirable in applications requiring rapid sequential scanning such as, for example, in imaging moving bodily organs. Hysteresis is the scintillator material property whereby the optical output varies for identical x-ray excitation based on the radiation history of the scintillator. This is undesirable due to the requirement in CT for repeated precise measurements of optical output from each scintillator cell and where the optical output must be substantially identical for identical x-ray radiation exposure impinging on the scintillator body. Typical detecting accuracies are on the order of one part in one thousand for a number of successive measurements taken at relatively high rate. High x-ray stopping power is desirable for efficient x-ray detection. Spectral linearity is another important scintillator material property because x-rays impinging thereon have different frequencies. Scintillator response must be substantially uniform at all x-ray frequencies.

Among scintillator phosphors considered for CT use are monocrystalline materials such as cesium iodide (CsI), bismuth germanate ($Bi_4Ge_3O_{12}$), cadmium tungstate ($CdWO_4$), and sodium iodide (NaI). Many of the aforementioned materials typically suffer from one or more deficiencies such as excessive afterglow, low light output, cleavage, low mechanical strength, hysteresis, and high cost. Many monocrystalline scintillators are also subject to hygroscopic attack. Known polycrystalline scintillators are efficient and economical. However, due to their polycrystalline nature, such materials are not efficient light propagators and are subject to considerable optical trapping. Internal light paths are extremely long and tortuous, resulting in unacceptable attenuation of optical output.

Fabrication of monocrystalline scintillators from multicomponent powder constituents is typically not economical and is frequently impractical. The multicomponent powder composition must be heated to a temperature above its melting point, and ingots of dimensions larger than those of each detector channel are grown from the melt. Considering the size of the bars required and the temperatures involved, the process is difficult in and of itself. In addition, some materials exhibit phase changes while cooling which would cause the crystals to crack when cooled after the growing process. Furthermore, single crystals tend to be susceptible to the propagation of lattice defects along the crystal planes.

U.S. Patent 4,242,221 describes methods for fabricating polycrystalline phosphors into ceramic-like scintillator bodies for use in CT.

The present invention provides improved ceramic scintillator bodies for use in CT.

The present invention provides improved ceramic scintillators composed of yttria-gadolinia and including a variety of rare earth activators for enhancing luminescent efficiency.

The terms "transparency" and "translucency", as used herein, describe various degrees of optical clarity in the scintillator material. Typically, the inventive scintillator materials exhibit an optical attenuation coefficient of less than 100 cm$^{-1}$, as measured by standard spectral transmittance tests (i.e., "narrow" angle transmission) on a polished scintillator material plate, at the luminescent wavelength of the respective ion. The most desirable scintillator materials have lower attenuation coefficients and hence higher optical clarity (transparency).

Rare-earth-doped, polycrystalline, yttria-gadolinia ceramic scintillators having high optical clarity, density, uniformity, cubic structure, and which are useful in CT include between about 5 mole percent and approximately 50 mole percent gadolinia ($Gd_2O_3$), and between about 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$, and $Pr_2O_3$, the remainder being yttria ($Y_2O_3$).

The invention also relates to methods for preparing an yttria-gadolinia ceramic scintillator body.

One method includes the step of preparing a multicomponent powder containing between about 5 and 50 mole percent $Gd_2O_3$ and between about 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$, and $Pr_2O_3$, the remainder of the powder being $Y_2O_3$. The multi-component powder is cold pressed to form powder compacts which are sintered to form the yttria-gadolinia polycrystalline ceramic scintillator body.

A second method includes the step of preparing a multicomponent powder including $Y_2O_3$, $Gd_2O_3$, and at least one rare-earth activator oxide selected from the group consisting of $Eu_2O_3$, $Nd_2O_3$, $Yb_2O_3$, $Dy_2O_3$, $Tb_2O_3$, and $Pr_2O_3$. The multi-component powder is pressed to form powder compacts which are sintered to the closed porosity stage. The sintered compacts are then gas hot isostatically pressed at elected temperature to form the polycrystalline ceramic scintillator.

Yet another method includes the step of preparing a multicomponent powder containing about 5 and 50 mole percent $Gd_2O_3$, and at least one rare-earth activator oxide selected from the group consisting of $Eu_2O_3$, $Nd_2O_3$, $Yb_2O_3$, $Dy_2O_3$, $Tb_2O_3$, and $Pr_2O_3$, the remainder of the multi-component powder being $Y_2O_3$. The multi-component powder is pressed under vacuum at a first temperature and pressure. The temperature and pressure are then increased and maintained so as to form the polycrystalline ceramic scintillator body.

The scintillator may also include strontia (SrO) or calcia (CaO) in quantities of between 0.1 mole percent to 2 mole percent for reducing luminescent afterglow.

It is an object of the invention to provide polycrystalline, yttria-gadolinia ceramic scintillators having high x-ray stopping power and high radiant efficiency.

It is another object of the invention to provide rare-earth-doped, polycrystalline yttria-gadolinia ceramic scintillators having high optical clarity, high density, high uniformity, cubic structure and which are particularly useful in CT and other x-ray detecting applications.

It is still another object of the invention to provide polycrystalline, yttria-gadolinia ceramic scintillators exhibiting low luminescent afterglow and low hysteresis.

It is yet another object of the invention to provide a sintering process for preparing rare-earth-doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

It is a further object of the invention to provide a sintering and gas hot isostatic pressing process for preparing rare-earth-doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

It is another object of the invention to provide a sintering process for preparing polycrystalline yttria-gadolinia ceramic scintillators exhibiting low luminescence afterglow.

It is a further object of the invention to provide a vacuum hot pressing process for preparing rare-earth-doped, transparent-to-translucent polycrystalline yttria-gadolinia ceramic scintillators having cubic crystalline structure, high x-ray stopping power, high density, high uniformity, high radiant efficiency and which are useful in radiation detectors such as those used in CT and digital radiography.

It is another object of the invention to provide a vacuum hot pressing process for preparing polycrystalline yttria-gadolinia ceramic scintillators exhibiting low luminescence afterglow.

The invention itself, however, both as to its organization and method of operation, together with further objects and advantages thereof, may best be understood by reference to the following description taken in conjunction with the accompanying drawings.

Fig. 1 is a graph depicting the effect of increased thoria ($ThO_2$) content on the light output of a yttria-gadolinia ceramic scintillator containing 3 mole percent $Eu_2O_3$.

Fig. 2 is a graphical illustration of the dependence of the relative light output on $Eu_2O_3$

activator concentration in an inventive scintillator material containing 25 mole percent $Gd_2O_3$.

Fig. 3a illustrates graphically the dependence of scintillator efficiency on yttria-gadolinia compositional ratio of an inventive ceramic scintillator containing 3 mole percent $Eu_2O_3$.

Fig. 3b is a graph illustrating 73 keV x-ray stopping power versus yttria-gadolinia compositional ratio of an inventive ceramic scintillator.

Fig. 4 is a graphical illustration of the effect of increased $Yb_2O_3$ concentrations on scintillator material afterglow.

Fig. 5 depicts graphically the relative light output of an inventive scintillator material with increased $Yb_2O_3$ content.

Fig. 6 is a graphical illustration of the effect of increased SrO concentration on scintillator material afterglow.

U.S. Patent 3,640,887, describes the manufacture of transparent polycrystalline ceramic bodies. The bodies include the oxides of thorium, zirconium and hafnium and mixtures thereof with oxides of rare earth elements 58 through 71 of the Periodic Table. The bodies may optionally include yttria. The average ionic radius of the rare earth oxide, with or without yttria, must not exceed about 0.093 nm, and the difference in ionic sizes of the constituent oxides should not exceed about 0.022 nm. The polycrystalline ceramics are used in high temperature applications and/or in applications requiring light transmission. Exemplary applications include high temperature microscopes, lamp envelopes, laser applications, and furnace windows.

The aforedescribed patent teaches that each polycrystalline ceramic body includes between about 2 to 15 mole percent of thoria ($ThO_2$) zirconia ($ZrO_2$), hafnia ($HfO_2$), or some combination thereof to act as a densifying agent during sintering.

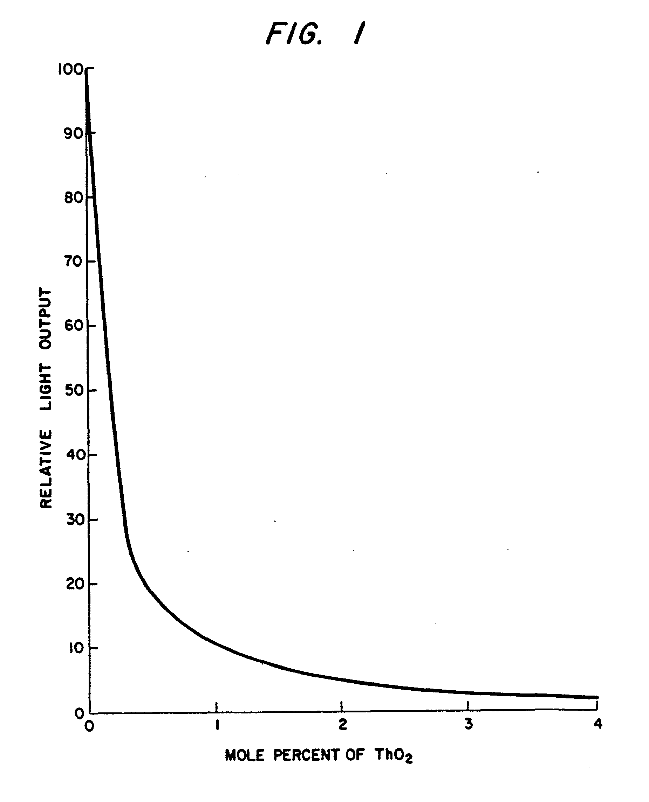

The inventors herein have found, however, that the inclusion of $ThO_2$, $ZrO_2$, or $HfO_2$ in the scintillator materials of the present invention in the quantities specified in the afore-mentioned patent results in a material having greatly reduced light output when excited by high energy radiation such as x-rays, making such materials unsuitable for CT applications. Fig. 1 illustrates relative light output (vertical axis) of a polycrystalline ceramic composed of about 58.7 mole percent $Y_2O_3$, 38 mole percent gadolinia, 3 mole percent $Eu_2O_3$, and 0.3 mole percent $Yb_2O_3$, with increasing $ThO_2$ mole percent (shown on the horizontal axis). As the quantity of $ThO_2$ is increased, the quantity of $Y_2O_3$ is correspondingly decreased. The average ionic radius of the ceramic constituents and the difference between ionic radii are as specified in the patent. It is evident from Fig. 1, that the light output for a material containing 2 mole percent $ThO_2$ (the minimum amount specified in U.S. 3,640,887) is only 5 percent of the light output for the same material without thoria. In fact, the addition of as little as 0.5 mole percent $ThO_2$, well below the lower limit specified in the patent, reduces the light output to a value of about 18 percent of that measured for the material without thoria. Ceramic scintillator materials useful in CT should have a light output no lower than about 35 percent of the light output of the material without $ThO_2$.

Substantial light output decreases have also been observed for additives such as cerium oxide ($CeO_2$), titanium oxide ($TiO_2$), zirconium oxide ($ZrO_2$), tantalum oxide ($Ta_2O_5$). For example, the relative light output of a ceramic body containing 55.5 mole percent $Yb_2O_3$, 38 mole percent $Gd_2O_3$, 1 mole percent $Eu_2O_3$, 0.5 mole percent $Yb_2O_3$, and 2 mole percent $ZrO_2$ was found to be 4 percent of the light output of the same material but without $ZrO_2$. These tetravalent ($4^+$) and pentavalent ($5^+$) additive species have an inhibiting effect on light output. It is important to note that light output refers to scintillation resulting from x-ray excitation. This is a significant distinction since some ceramic bodies fluoresce under ultraviolet excitation, but do not scintillate upon x-ray excitation, for example.

In accordance with the present invention, translucent-to-transparent rare-earth ceramic scintillator bodies are produced without the addition of the aforedescribed scintillation inhibiting densifying additives. The light output of the inventive ceramic scintillators upon x-ray excitation is sufficient to render them useful in CT.

The inventive scintillators are made up of rare earth yttria-gadolinia hosts and trivalent rare earth activator oxides. The scintillator bodies are fabricated by one of several methods, such as sintering, sintering with gas hot isostatic pressing (GHOP), and hot pressing (all more fully described hereinafter). The finished scintillator bodies having optimum over-all properties are comprised of a cubic solid solution of the chemical constituents as verified by x-ray diffraction techniques.

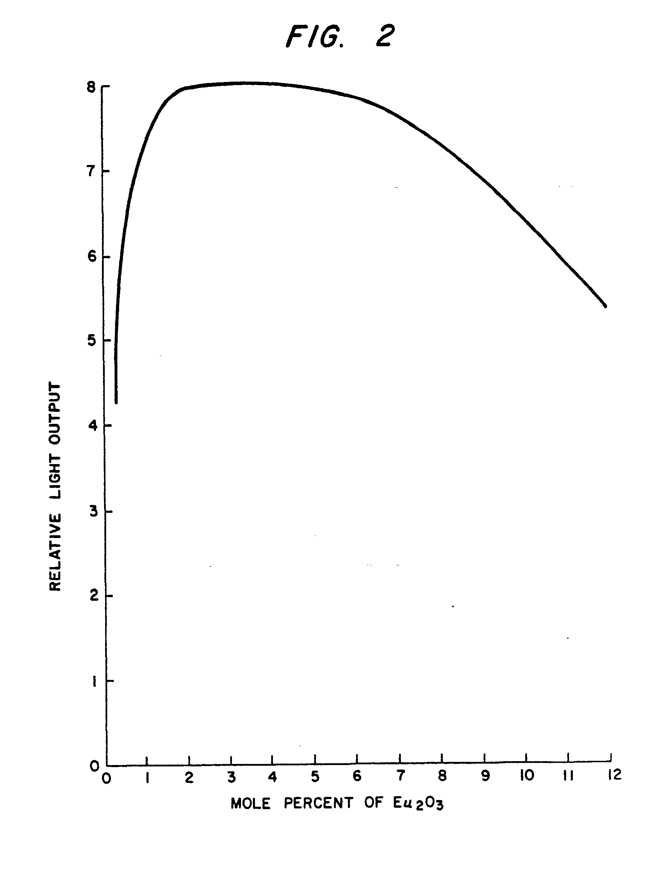

The oxides of trivalent rare earth elements such as europium, neodymium, ytterbium, dysprosium, terbium, and praseodymium, ($Eu_2O_3$, $Nd_2O_3$, $Yb_2O_3$, $Dy_2O_3$, $Tb_2O_3$, and $Pr_2O_3$, respectively) are added to the basic yttria-gadolinia system as activators to enhance scintillator efficiency. Yttria-gadolinia scintillators, containing $Eu_2O_3$, exhibit excellent scintillating efficiency. Generally, rare earth activator concentration may range between 0.02 and 12 mole percent. Optimum concentration of $Eu_2O_3$, is between 1 and 6 mole percent. This is illustrated in Fig. 2 which shows that the highest relative light output, indicated on the vertical axis, is observed for $Eu_2O_3$ concentrations of between about 1 and 6 mole percent, as indicated on the horizontal axis. The curve depicted in Fig. 2 was obtained by varying $Eu_2O_3$ content of a scintillator material containing 25 mole percent $Gd_2O_3$, the remainder being $Y_2O_3$.

An exemplary yttria-gadolinia scintillator material using neodymium oxide ($Nd_2O_3$) activator is made up of 30 mole percent $Gd_2O_3$, 0.25 mole percent $Nd_2O_3$, the remainder being

$Y_2O_3$. $Nd_2O_3$ is preferably added in quantities of between 0.05 and 1.5 mole percent. Most preferably, however, $Nd_2O_3$ is added in concentrations of between 0.1 and 0.5 mole percent. Preferred terbium oxide ($Tb_2O_3$) activator concentration is between 0.05 and 3.0 mole percent, while the preferred concentration of dysprosium oxide ($Dy_2O_3$) activator is between 0.03 and 1.0 mole percent. Exemplary compositions of yttria-gadolinia scintillator materials employing $Th_2O_3$ and $Dy_2O_3$ rare earth activators comprise 0.15 mole percent $Th_2O_3$, and 0.2 mole percent $Dy_2O_3$, respectively, each including 40 mole percent $Gd_2O_3$, the remainder being $Y_2O_3$. The preferred range for $Y_2O_3$ activator is between about 0.10 and 2.0 mole percent. The preferred mole percentage for the $Pr_2O_3$ activator is between 0.02 and 0.05.

It is to be noted that activator efficacy is independent of the compositional ratios of $Y_2O_3$ and $Gd_2O_3$. $Eu_2O_3$ is the preferred activator followed, in order of preference, by $Nd_2O_3$ and $Dy_2O_3$.

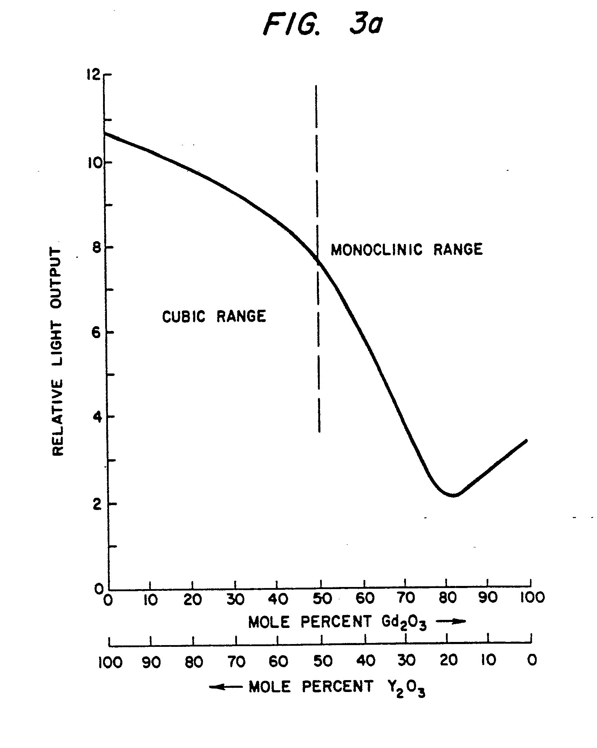

Fig. 3a illustrated the dependence of scintillator efficiency, as measured by relative light output, on the relative mole percent content of a yttria and gadolinia in a scintillator material containing 3 mole percent $Eu_2O_3$. The relative mole percentages of $Gd_2O_3$ and $Y_2O_3$ are shown on the horizontal axis, while the relative light output is shown on the vertical axis. The dashed line at 50 mole percent $Gd_2O_3$. Scintillator materials containing between 50 and 65 mole percent $Gd_2O_3$ exhibit modest relative light output, but are increasingly subject to grain boundary cracking and reduced relative light output due to progressive transition from cubic to monoclinic crystalline phase.

The cubic crystalline phase is characterized by a high degree of scintillator material structural symmetry. Materials having such structure are particularly desirable for CT applications. Scintillator materials having increasing amounts of monoclinic phase are characterized by lower relative light outputs and poor optical clarity due to grain boundary cracking and nonuniform crystalline structure. Materials having such non-cubic structure exhibit appreciable light scattering and reabsorption due to a longer effective relative light path length, thereby decreasing the amount of light available for detection by external photosensors.

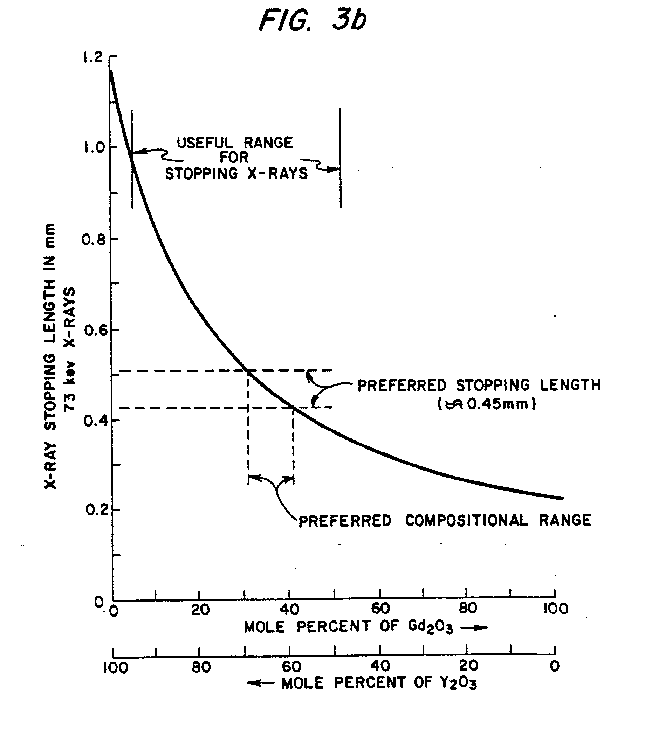

In considering the usefulness of the scintillator material in CT applications, the x-ray stopping power of the material must also be considered. Fig. 3b illustrates the dependence of 73 keV x-ray stopping length versus yttria-gadolinia compositional ratio for transparent and efficient scintillators. Stopping power is measured in terms of x-ray stopping length, i.e., the distance an x-ray photon penetrates into the scintillator prior to its conversion to optical wavelength photons which are detectable by photosensors. X-ray stopping length is primarily dependent on $Gd_2O_3$ content and, as shown in Fig. 3b, increases with increased $Gd_2O_3$ concentration. Generally, it is preferred to use between about 5 mole percent and 50 mole percent $Gd_2O_3$. Materials containing less than about 5 mole percent $Gd_2O_3$ exhibit low x-ray stopping power for most practical detector design, while materials having more than 50 mole percent are increasingly non-cubic and exhibit poor optical clarity. A more preferred range of $Gd_2O_3$ content is between 20 and 40 mole percent. The most preferred range of $Gd_2O_3$ concentration is between 30 mole percent and 40 mole percent, corresponding to an x-ray stopping length of about 0.45 mm. For a 2 millimeter thick scintillator material having an x-ray stopping length of 0.45 mm, approximately 99 percent of x-ray photons entering the material are converted to optical wavelength photons.

Certain additives are useful in the yttria-gadolinia scintillator system of the present invention to reduce undesirable scintillator material luminescent afterglow, which may lead to undesirable distortion and the presence of artifacts in reconstructed images. The luminescent afterglow phoenomenon is classifiable into primary or fundamental afterglow and secondary afterglow. Primary afterglow is of relatively short duration (up to approximately 3 milliseconds), while secondary afterglow may be several times to much more than several times the primary decay time. Fundamental luminescent afterglow of a phosphor is thought to be inextricably associated with the specific activator identity and the activator local environment in the host matrix (in this case yttria-gadolinia). The secondary, and most objectionable type of afterglow, can be associated with more subtle changes in the activator environment or simply with the presence of additional electron-hole "trapping" centers created by native defects and/or low level impurities at other sites in the host crystal. Both types of afterglow may be reduced by suitable purification or the addition of compensating dopants. The added dopants used to reduce afterglow do so by forming "killer" centers which are believed to compete with the activator centers for electron-hole pairs that otherwise combine radiatively at the activator centers.

Luminescent afterglow of rare earth doped yttria-gadolinia ceramic scintillators of the present invention can be substantially reduced by several types of additives.

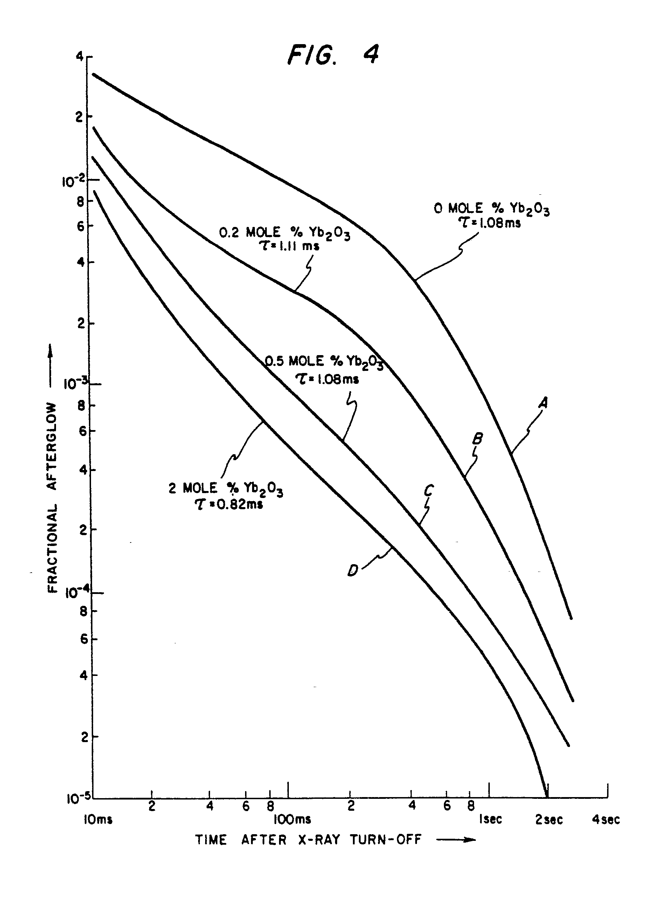

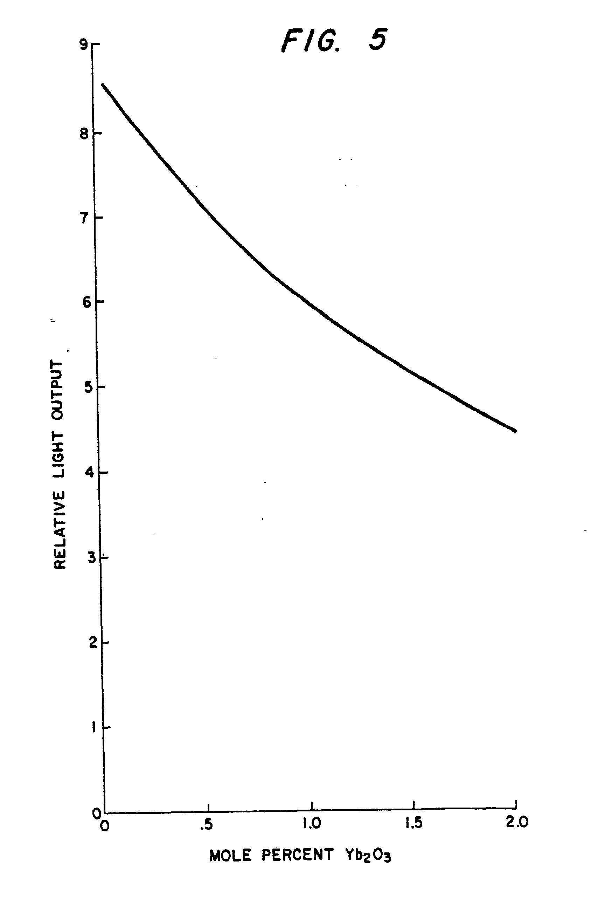

The addition of ytterbium oxide ($Yb_2O_3$); itself a luminescent activator in the yttria-gadolinia host if used alone as described heretofore, results in the reduction of undesirable secondary afterglow with only minor sacrifice of luminescent efficiency. If, as depicted in Fig. 4, the mole percentage of $Yb_2O_3$ is increased from zero to about 2 mole percent, the primary or fundamental afterglow, of the scintillator material activated with 3 mole percent of $Eu_2O_3$ is reduced from 1.1 to 0.82 milliseconds. An increase in $Yb_2O_3$ content from 0 to 2 mole percent is accompanied by the loss of nearly 50 percent of scintillator material luminescent efficiency as graphically depicted in Fig. 5 in which relative light output is shown on the vertical axis, while the $Y_2O_3$ concentration is shown on the horizontal axis.

Curves A, B, C and D, depicted in Fig. 4, illustrate the fraction of secondary luminescent afterglow (vertical axis) remaining at times greater than 10 milliseconds (horizontal axis) following the cessation of x-ray excitation. For a scintillator material having 30 mole percent $Gd_2O_3$, 3 mole percent $Eu_2O_3$, and 67 mole pecent $Y_2O_3$, it is evident from Curve A that about three percent of the luminescence present immediately upon x-ray shut-off remains at the end of 10 milliseconds following x-ray shut-off. Curves B, C, and D depict fractional afterglow for similar scintillator materials which additionally contain 0.2, 0.5, and 2 mole percent $Yb_2O_3$ respectively, and correspondingly less $Y_2O_3$. It is apparent that increasing quantities of $Yb_2O_3$ reduce secondary afterglow. For example, at about 10 milliseconds after x-ray turnoff, fractional afterglow for a scintillator material containing 2 mole percent $Yb_2O_3$ (Curve D) is only approximately 0.7 percent $(7\times10^{-3})$ of its value immediately upon termination of x-ray excitation as compared to about 3 percent $(3\times10^{-2})$ for a material without $Yb_2O_3$ (Curve A). The addition of 0.3 mole percent $Yb_2O_3$ to a scintillator composition made up of 66.7 mole percent $Y_2O_3$, 30 mole percent $Gd_2O_3$, and 3 mole percent $Eu_2O_3$ results in an extremely useful CT scintillator material having a fast decay time. Preferred concentration of $Yb_2O_3$ for afterglow reduction is between about 0.15 and 0.7 mole percent.

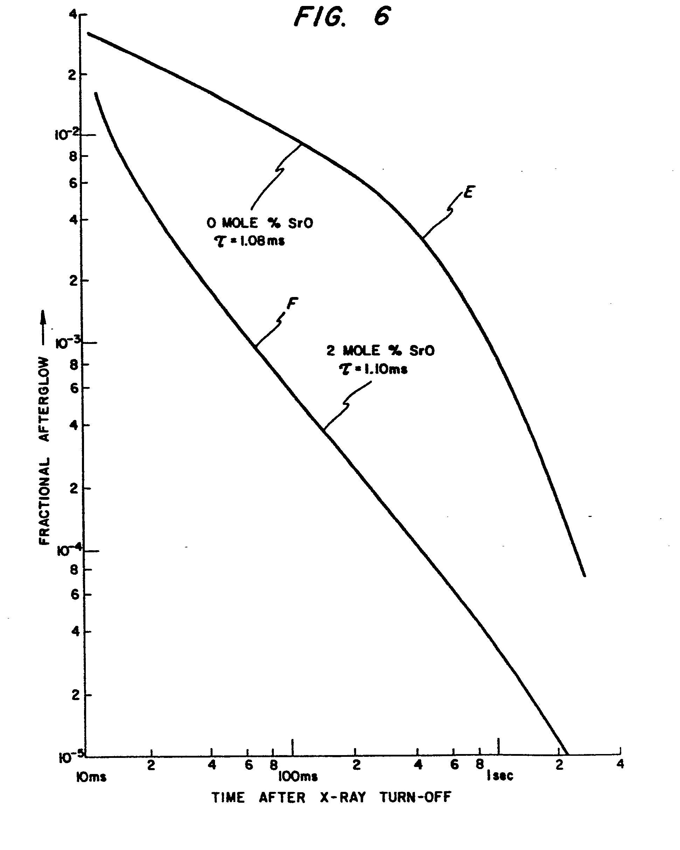

Another additive dopant which is effective in reducing scintillator material luminescent afterglow is strontium oxide (SrO). The addition of SrO results primarily in the reduction of secondary afterglow with relatively little sacrifice of luminescent efficiency. In the yttria-gadolinia scintillator system, the quantity of SrO generally found to be useful in reducing afterglow is between 0.1 and 2 mole percent. It is shown in Fig. 6 that an increase in the quantity of SrO from 0 to 2 mole percent has no appreciable effect on primary afterglow, $\tau$, 1.08 milliseconds and 1.10 milliseconds, respectively. However, there is appreciable effect on secondary afterglow as depicted by curves E and F. A scintillator material having 30 mole percent $Gd_2O_3$, 2 mole percent $Eu_2O_3$, 68 mole percent $Y_2O_3$, but no SrO (curve E) exhibits, at about 150 milliseconds after x-ray turn-off, about 0.8 percent $(8\times10^{-3})$ of the luminescence present immediately after x-ray shut-off. Scintillator materials having the same composition (curve F) but including 2 mole percent SrO (and 2 mole percent less $Y_2O_3$) exhibit, after the same elapsed time, only about 0.03 percent $(3\times10^{-4})$ fractional afterglow as indicated on the vertical axis in Fig. 6.

The addition of calcium oxide (CaO) to the scintillator material (instead of SrO) has been found to produce an afterglow reducing effect similar to that obtained with SrO. CaO is useful as an afterglow reducer in quantities of between 0.1 and 2 mole percent.

The aforedescribed yttria-gadolinia rare-earth-doped ceramic scintillator materials may be prepared by sintering, sintering plus gas hot isostatic pressing, and hot pressing ceramic methods. The ceramic scintillator materials are preferably and most economically fabricated by employing a sintering process.

A preliminary step in the fabrication of the ceramic scintillators, by any of the afore-mentioned methods, requires the preparation of a suitable powder containing the desired scintillator material constituents. In accordance with a first method for preparing such a powder, submicrometer-to-micrometer powders of yttria $(Y_2O_3)$, gadolinia $(Gd_2O_3)$ having purities of, for example, 99.99 percent to 99.9999 percent are mixed with the desired rare earth activators in the form of oxides, oxalates, carbonates, or nitrates and mixtures thereof. The mixing of the selected constituents may be carried out in an agate mortar and pestle or in a ball mill using water, heptane, or an alcohol (such as ethyl alcohol) as liquid vehicles. Dry milling may also be used for both mixing and breakup of powder aggregates. If dry milling is employed, a grinding aid such as 1 to 5 weight percent of stearic acid or oleic acid should be employed to prevent powder packing or sticking inside the ball mill. A transparency promoter SrO may also be added in the form of an oxide, nitrate, carbonate, or oxalate before ball milling. If the various additives are nitrates, carbonates, or oxalates, a calcining step is required to obtain the corresponding oxides prior to fabrication of the ceramic scintillator by any of the methods described hereinafter.

A second approach to obtaining the desired scintillator starting powder employs a wet chemical oxalate method. In this method, the selected molar percentages of the nitrates of predetermined ones of Y, Gd, Eu, Nb, Yb, Dy, Tb, Pr and Sr are dissolved in water and coprecipitated in oxalic acid to form the respective oxalates. The oxalate precipitation process involves the addition of an aqueous nitrate solution of the desired scintillator material constituents to an oxalic acid solution which is, for example, 80 percent saturated at room temperature. The resulting coprecipitated oxalates are washed, neutralized, filtered, and dried in air at about 100°C for approximately eight hours. The oxalates are then calcined in air (thermally decomposed) at approximately 700°C to about 900°C for a time ranging from one to four hours, to form the corresponding oxides. Typically, heating for one hour at 800°C is sufficient. Preferably, if either the hot pressing or the sintering method is used to prepare the scintillator, the oxalates and/or the resulting oxides are milled by one of several methods such as ball, colloid, or fluid energy milling to enhance the optical clarity. Milling of the powder for between one-half hour and ten hours has been found to be sufficient. It should be noted, however, that typically the optical clarity of the scintillator is improved by milling the oxalates and/or oxides regardless of the preparation method.

Following the preparation of the selected powder composition by one of the methods described above, in accord with the preparation of scintillator materials by sintering, selected amounts of the powder composition are formed into powder compacts by either die pressing, or die pressing followed by isostatic pressing to further increase green density. A die material which is inert with respect to the scintillator constituents is preferrred to avoid undesired reactions and contaminations. Suitable die materials include alumina, silicon carbide, and metals such as molybdenum, hardened steel, or nickel-based alloys. The powder compacts are formed by die pressing at pressures of between about 2.068 daN/mm$^2$ (3,000 psi) and 10.34 daN/mm$^2$ (15,000 psi). Alternatively, the die pressed powder compacts may be isostatically pressed at between about 6.89 daN/mm$^2$ (10,000) and 41.36 daN/mm$^2$ (60,000 psi) to further increase powder compact green density. If any grinding aids or compaction aids (lubricants, such as waxes) have been used, an oxidation treatment to remove all organic additives can be employed prior to sintering.

During the sintering phase, the compacts are heated in a high temperature tungsten furnace, for example, in vacuum or a reducing atmosphere such as a wet hydrogen atmosphere (dew point of about 23°C, for example) at a rate of between approximately 100°C per hour to 700°C per hour to the sintering temperature of between 1800°C and 2100°C. The sintering temperature is then held from 1 hour to about 30 hours to cause extensive densification and optical clarity development. Upon termination of the sintering step, the compacts are cooled from the sintering temperature to room temperature over a period of time ranging from about 2 to 10 hours.

Sintered ceramic scintillators may also be prepared by a heating sequence which includes a hold at a temperature lower than the final sintering temperature. Typically, the powder compact is heated at a rate of between 300°C/hr and 400°C/hr to a holding temperature of between about 1600°C and 1700°C. The holding period may range from 1 hour to 20 hours, following which the temperature is raised to between about 1800°C and 2100°C for final sintering for between 1 hour and 10 hours. The increase from the holding temperature to the final sintering temperature is at a rate of between about 25°C/hr and 75°C/hr. A preferred heating sequence comprises heating the powder compact to a holding temperature of 1660°C in five hours, holding this temperature for 10 hours, followed by heating to 1950°C in 6 hours, and then sintering at 1950°C for 2 hours.

A first ceramic scintillator composed of 59.85 mole percent Y$_2$O$_3$, 40 mole percent Gd$_2$O$_3$, and 0.15 mole percent Tb$_2$O$_3$, and a second scintillator made up of 59.8 mole percent Y$_2$O$_3$, 40 mole percent Gd$_2$O$_3$, and 0.2 mole percent Dy$_2$O$_3$ were prepared using the preferred sintering sequence. In each case, oxalate coprecipitation method and calcined at 800°C for one hour to obtain the corresponding oxides. The oxides were initially cold pressed into powder compacts at 2.41 daN/mm$^2$ (3,500 psi) and then isostatically pressed at 19.99 daN/mm$^2$ (29,000 psi) to further increase green density. This was followed by heating the powder compacts in a wet H$_2$ atmosphere is five hours to 1660°C. Following a 10 hour holding period at 1660°C the temperature was raised to 1950°C and held for two hours. The resulting ceramic scintillators were then furnace-cooled to room temperature.

Yttria/gadolinia ceramic scintillators for luminescent applications may also be prepared by a combination of processes involving sintering and gas hot isostatic pressing (GHIP). The starting oxide powder compositions are prepared in accordance with one of the aforedescribed methods. Preferably, the oxalate coprecipitation method is used. By way of example and not limitation, one useful yttria-gadolinia scintillator composition comprised 66.8 mole percent Y$_2$O$_3$, 30 mole percent Gd$_2$O$_3$, 3 mole percent Eu$_2$O$_3$, and 0.3 mole percent Yb$_2$O$_3$. In contrast to the previously described sintering process, which preferably requires milling of the oxalate and/or oxide powders to produce transparent ceramics, the process of sintering combined with GHIP permits the fabrication of transparent ceramics from unmilled powders.

In the fabrication of yttria-gadolinia ceramic scintillators by the combined processes of sintering and gas hot isostatic pressing, following the preparation of a powder having the desired composition, powder compacts are formed by cold pressing at pressures of between 2.068 daN/mm$^2$ (3,000 psi) and 6.89 daN/mm$^2$ (10,000 psi), followed by isostatic pressing at pressures of between 10.34 daN/mm$^2$ (15,000 psi) and 41.36 (60,000 psi). The pressed compacts are then presintered to 93 to 98 percent of their theoretical density at temperatures of about 1500°C to 1700°C for between 1 and 10 hours. The presintered compacts are then gas hot isostatically pressed with argon gas at pressures of 0.689 daN/mm$^2$ (1,000 psi) to 20.68 daN/mm$^2$ (30,000 psi) at temperatures between 1500°C and 1800°C for 1 to 2 hours.

In accordance with an example of the preparation of a ceramic scintillator employing the sintering and GHIP technique, a powder compact was formed by cold pressing approximately 20 grams of powder in a rectangular die at a pressure of approximately 2.75 daN/mm$^2$ (4,000 psi). The sample was then isostatically pressed at 20.68 daN/mm$^2$ (30,000 psi) to increase green density to 49 percent of its theoretical value. The cold pressing of the sample was followed by sintering in a wet hydrogen atmosphere (dew point 23°C) for two hours at 1660°C so that closed porosity is developed. The density of the sintered sample, as measured by the water immersion method, at this stage in the fabrication process was determined to be between 93 and 98 percent of its theoretical value. In order to obtain additional densification and optical transparency, the sample was gas hot isostatically pressed in a carbon resistance furnace at 1750°C for one hour at an argon pressure of 17.23 daN/mm² (25,000 psi). During gas hot isostatic pressing, the temperature was increased to the final value of 1750°C in a step-wise manner. The sample was initially heated in one hour to 1400°C and the temperature raised thence to 1750°C, the resulting ceramic scintillator had a black appearance due to reduction in the reducing furnace atmosphere. The sample was rendered transparent to visible light by suitable oxidation treatment such as heating in air at a temperature of 1200°C for thirty-two hours. Comparison of the physical dimensions of the sample before and after the GHIP treatment indicates that the sample shrunk during the GHIP step, indicating further densification. The finished ceramic exhibited a density of greater than 99.9 percent of theoretical value.

Transparent yttria-gadolinia ceramic scintillators may also be prepared by vacuum hot pressing a scintillator material powder prepared, preferably, by the aforedescribed wet oxalate coprecipitation process. In accordance with this method, a selected quantity of the calcined oxalate powder (preferably milled) is pressed in a graphite die with molybdenum foil used as spacers between the upper and lower graphite plungers. Alternatively, a boron nitride coated graphite die may be used. A pressure of 0.689 daN/mm² (1000 psi) to 0.827 daN/mm² (1200 psi) is applied at a temperature of between about 600°C and 700°C under a vacuum of less than 200 micrometers and maintained for about one hour. Thereafter, the pressure is increased to approximately between 2.76 daN/mm² (4000 psi) and 6.89 daN/mm² (10,000 psi). The pressure is released after a hold at the elevated temperature of between one-half to four hours and the sample furnace cooled to room temperature.

Ceramic scintillator samples prepared in accordance with the hot-pressing method may be discolored due to surface reaction with the molybdenum spacer. Additional discoloration may be due to oxygen deficiency in the furnace atmosphere during hot pressing. The ceramics, however, can be made optically clear by oxidation in air or an oxygen-containing atmosphere at a temperature of about 800°C to 1200°C for between one and twenty hours. Any residual discoloration may be removed by conventional grinding and polishing techniques.

In a specific example of the preparation of a scintillator material by the vacuum hot-pressing, method, 10 grams of a scintillator oxide material were obtained from the aforedescribed oxalate coprecipitation process by calcination of the oxalates at 800°C for one hour in air. The oxides were initially hot pressed in a boron nitride coated graphite die at 700°C for one hour under a vacuum of about 20 micrometers and at a pressure of 0.827 daN/mm² (1200 psi). The temperature and pressure were then increased to 1400°C and 4.13 daN/mm² (6,000 psi), respectively, under a vacuum of approximately 100 micrometers. These conditions were maintained for two hours, following which the pressure was released and the resulting scintillator material furnace cooled.

The scintillator material was gray to gray-black in color due to the reducing atmosphere created in the hot press. Light grinding of the scintillator surface and heating at 950°C for four hours removed carbon sticking to the scintillator material. The remainder of the dark coloration was removed by additional oxidation at 1150°C for two hours in air. The resulting scintillator material was "light tan" in color, translucent to transparent in optical quality, and exhibited good relative light output upon excitation by x-rays.

From the foregoing, it will be appreciated that rare earth-doped, pplycrystalline yttria-gadolinia scintillators having high density, optical clarity, uniformity, cubic structure and which are useful in computerized tomography and other x-ray detecting applications have been disclosed. The scintillators also exhibit high x-ray stopping power and high radiant efficiency. Due to inclusion of specific additives, scintillator luminescent afterglow and hysteresis are minimized.

From the foregoing, it will also be appreciated that the invention provides methods for sintering, for sintering and gas hot isostatic pressing and for vacuum hot pressing, transparent-to-translucent, rare-earth-doped polycrystalline yttria-gadolinia ceramic scintillators having cubic crystalline structure, high x-ray stopping power, high radiant efficiency, high density, high uniformity, as well as low luminescence afterglow and which are useful radiation detectors such as those used in CT and digital radiography.

## Claims

1. A polycrystalline ceramic scintillator consisting essentially of between 5 mole percent and 50 mole percent $Gd_2O_3$, and between 0.02 and 12 mole percent of at least one rare-earth activator oxide selected from the group consisting of $Eu_2O_3$, $Nd_2O_3$, $Yb_2O_3$, $Dy_2O_3$, $Tb_2O_3$, and $Pr_2O_3$, the remainder being $Y_2O_3$.

2. A polycrystalline ceramic scintillator comprising between 5 and 50 mole percent of $Gd_2O_3$, between 0.02 and 12 mole percent of at least one rare-earth activator selected from the group consisting of $Eu_2O_3$, $Nd_2O_3$, $Yb_2O_3$, $Dy_2O_3$, $Tb_2O_3$, and $Pr_2O_3$, and between 0.1 and 2 mole percent each of at least one afterglow reducer selected from the group consisting of CaO and SrO, the remainder being $Y_2O_3$.

3. A polycrystalline ceramic scintillator consisting essentially of between 5 and 50 mole percent $Gd_2O_3$, 0.5 to 12 mole percent $Eu_2O_3$, and 0.1 and 2 mole percent $Yb_2O_3$, the remainder being $Y_2O_3$.

4. The polycrystalline ceramic scintillator of any of claims 1—3 wherein said rare-earth activator oxide consists essentially of between 1 and 6 mole percent of $Eu_2O_3$.

5. The polycrystalline ceramic scintillator of any of claims 1—3 wherein said rare-earth activator oxide consists essentially of between 20 and 40 mole percent of $Gd_2O_3$.

6. The polycrystalline ceramic scintillator of claims 1 or 2 wherein said rare-earth activator oxide consists essentially of between 0.05 and 1.5 mole percent of $Nd_2O_3$.

7. The polycrystalline ceramic scintillator of claim 6 wherein said rare-earth activator oxide consists essentially of between 0.1 and 0.5 mole percent of $Nd_2O_3$.

8. The polycrystalline ceramic scintillator of claim 1 or 2 wherein said rare-earth activator oxide consists essentially of between 0.5 and 3 mole percent of $Tb_2O_3$.

9. The polycrystalline ceramic scintillator of claim 1 or 2 wherein said rare-earth activator oxide consists essentially of between 0.1 and 2 mole percent of $Yb_2O_3$.

10. The polycrystalline ceramic scintillator of claim 9 wherein said rare-earth activator oxide consists essentially of between 0.15 and 0.7 mole percent of $Yb_2O_3$.

11. The polycrystalline ceramic scintillator of claim 1 or 2 wherein said rare-earth activator oxide consists essentially of between 0.03 and 1 mole percent of $Dy_2O_3$.

12. The polycrystalline ceramic scintillator of claim 1 or 2 wherein said rare-earth activator oxide consists essentially of between 0.02 and 0.05 mole percent of $Pr_2O_3$.

13. A method for preparing a polycrystalline ceramic scintillator body comprising the steps of:
preparing a multicomponent powder including between 5 and 50 mole percent $Gd_2O_3$, and between 0.02 and 12 mole percent of at least one rare earth activator oxide selected from the group consisting of $Eu_2O_3$, $Nd_2O_3$, $Yb_2O_3$, $Dy_2O_3$, $Tb_2O_3$, and $Pr_2O_3$, the remainder of said multicomponent powder being $Y_2O_3$;
cold pressing said multicomponent powder to form a powder compact; and
sintering said powder compact to form said polycrystalline ceramic scintillator body.

14. A method for preparing a polycrystalline ceramic scintillator body comprising the steps of:
preparing a multicomponent powder including between 5 and 50 mole percent $Gd_2O_3$, and between 0.02 and 12 mole percent of at least one rare earth activator oxide selected from the group consisting of $Eu_2O_3$, $Nd_2O_3$, $Yb_2O_3$, $Dy_2O_3$, $Tb_2O_3$, and $Pr_2O_3$, the remainder of said multicomponent powder being $Y_2O_3$;
pressing said multicomponent powder to form a powder compact;
sintering said powder compact to closed porosity stage; and
pressing the sintered powder compact by the gas hot isostatic process to form said polycrystalline ceramic scintillator body.

15. A method for preparing a polycrystalline ceramic scintillator body comprising the steps of:
preparing a multicomponent powder including between 5 and 50 mole percent $Gd_2O_3$, and between 0.02 and 12 mole percent of at least one rare earth activator oxide selected from the group consisting of $Eu_2O_3$, $Nd_2O_3$, $Yb_2O_3$, $Dy_2O_3$, $Tb_2O_3$, and $Pr_2O_3$, the remainder of said multicomponent powder being $Y_2O_3$;
pressing said multicomponent powder under vacuum at a first temperature and pressure for a first predetermined period of time; and
increasing said first temperature and pressure to a second temperature and pressure and maintaining said second temperature and pressure for a second period of time to form said polycrystalline ceramic scintillator body.

16. The method of any of claims 13—15 wherein said multicomponent powder comprises between 20 and 40 mole percent $Gd_2O_3$.

17. The method of any of claims 13—15 wherein said multicomponent powder comprises between 1 and 6 mole percent $Eu_2O_3$.

18. The method of any of claims 13—15 wherein said multicomponent powder comprises between 0.1 and 2 mole percent $Y_bO_3$.

19. The method of any of claims 13—15 wherein said multicomponent powder comprises between 20 and 40 mole percent $Gd_2O_3$, between 1 and 6 mole percent $Eu_2O_3$, between 0.1 and 2 mole percent $Yb_2O_3$, the remainder being $Y_2O_3$.

20. The method of any of claims 13—15 wherein said multicomponent powder comprises between 0.05 and 1.5 mole percent $Nd_2O_3$.

21. The method of any of claims 13—15 wherein said multicomponent powder comprises between 0.05 and 3 mole percent $Tb_2O_3$.

22. The method of any of claims 13—15 wherein said multicomponent powder comprises between 0.03 and 1 mole percent $Dy_2O_3$.

23. The method of any of claims 13—15 wherein said multicomponent powder comprises between 0.02 and 0.05 mole percent $Pr_2O_3$.

24. The method of any of claims 13—15 wherein said multicomponent powder comprises between 0.1 and 2 mole percent SrO or CaO.

25. The method of any of claims 13—15 wherein said step of preparing said multicomponent powder comprises mixing high purity, micrometer-to-submicrometer powders of $Gd_2O_3$, $Y_2O_3$, and at least one of said rare earth activator oxides.

26. The method of any of claims 13—15 wherein said step of preparing said multicomponent powder comprises the steps of:
coprecipitating by the wet chemical oxalate process the oxalates of Y , Gd, and at least one of said rare earth activator oxides; and
calcining said oxalates so as to obtain the corresponding oxides.

27. The method of any of claims 13—15 wherein said step of calcining comprises the step of heating said oxalates in air at a temperature of between 700°C and 900°C for between 1 hour and 4 hours.

28. The method of claim 26 wherein said step of calcining is preceded by the step of milling said oxalates.

29. The method of any of claims 26 or 28 further comprising the step of milling said oxides obtained in said calcining step.

30. The method of any of claims 13, 25 or 26 wherein said step of cold pressing comprises the step of die pressing said multicomponent powder at a pressure of between 2.068 daN/mm² (3,000 psi) and 10.34 daN/mm² (15,000 psi).

31. The method of claim 30 wherein said step of cold pressing further comprises the step of isostatically pressing the die pressed multi-component powder at a pressure of between 6.89 daN/mm² (10,000 psi) and 41.36 daN/mm² (60,000 psi) to further increase the green density and uniformity of said powder compact.

32. The method of claim 31 wherein said step of sintering comprises the steps of:

heating said powder compact at a rate of between 100°C per hour and 700°C per hour to a sintering temperature of between 1800°C and 2100°C; and

holding said sintering temperature for between 1 and 30 hours.

33. The method of claim 31 wherein said step of sintering comprises the steps of:

heating said powder compact at a rate of between 300°C/hr and 400°C/hr to a holding temperature of between 1600°C and 1700°C;

maintaining said holding temperature for between 1 and 20 hours and then increasing the temperature at a rate of between 25°C/hr and 75°C/hr to a final sintering temperature of between 1800°C and 2100°C; and

maintaining the final sintering temperature for between 1 and 10 hours.

34. The method of claim 31 wherein said step of heating comprises heating said powder compact in vacuum or in a reducing atmosphere.

35. The method of claim 31 further comprising the step of cooling the resulting polycrystalline ceramic scintillator body to room temperature over a period of between 2 and 10 hours.

36. The method of any of claims 14, 25 or 26 wherein said step of pressing to form said powder compact comprises the steps of:

cold pressing said multicomponent powder at a pressure of between 2.068 daN/mm² (3,000 psi) and 6.89 daN/mm² (10,000 psi) to form a preliminary powder compact; and then

isostatically pressing said preliminary powder compact at a pressure of between 10.34 daN/mm² (15,000 psi) and 41.36 daN/mm² (60,000 psi) to increase the green density thereof.

37. The method of claim 36 wherein said step of sintering comprises heating said powder compact at a temperature of between 1500°C and 1700°C for between 1 and 10 hours.

38. The method of claim 37 wherein said step of pressing the sintered powder compact by the gas hot isostatic process comprises the step of heating at a temperature of between 1500°C and 1800°C for between 1 and 2 hours at an argon gas pressure of between 0.689 daN/mm² (1,000 psi) and 20.68 daN/mm² (30,000 psi).

39. The method of claim 38 wherein said step of pressing the sintered powder compact by the gas hot isostatic process more specifically comprises the steps of:

heating said powder compact for one hour to raise the temperature thereof to 1400°C, continue heating said powder compact for an additional one hour to raise the temperature thereof to 1750°C; and then

maintaining the temperature of said powder compact at 1750°C for 1 hour prior to furnace-cooling said powder compact to room temperature, said steps of heating and maintaining the temperature being performed at an argon gas pressure of 17.23 daN/mm² (25,000 psi).

40. The method of any of claims 15, 25 or 26 wherein said step of pressing comprises the step of pressing said multicomponent powder at a pressure of between 0.689 daN/mm² (1,000 psi) and 0.827 daN/mm² (1,200 psi) at a temperature of between 600°C and 700°C under a vacuum of up to 200 micrometers for 1 hour.

41. The method of claim 40 wherein said step of increasing said first temperature and pressure comprises increasing the temperature to between 1300°C and 1600°C, increasing the pressure to between 2.75 daN/mm² (4,000 psi) and 6.89 daN/mm² (10,000 psi), and maintaining said increased temperature and pressure for between one-half hour to 4 hours.

42. The method of claim 41 further comprising the step of oxidizing the resulting hot pressed ceramic, said step of oxidizing including heating said ceramic in an oxygen-containing atmosphere for between 1 and 20 hours at a temperature of between 800°C and 1200°C so as to remove any discoloration.

**Patentansprüche**

1. Polykristalliner keramischer Szintillator, dadurch gekennzeichnet, daß er im wesentlichen aus zwischen 5 Molprozent und 50 Molprozent $Gd_2O_3$ und zwischen 0,02 und 12 Molprozent aus zumindest einem Seltenerdoxid - Aktivator, ausgewählt aus der Gruppe bestehend aus $Eu_2O_3$, $Nd_2O_3$, $Yb_2O_3$, $Dy_2O_3$, $Tb_2O_3$ und $Pr_2O_3$, besteht, wobei der Rest $Y_2O_3$ ist.

2. Polykristalliner keramischer Szintillator, dadurch gekennzeichnet, daß er aus zwischen 5 und 50 Molprozent $Gd_2O_3$, zwischen 0,02 und 12 Molprozent aus zumindest einem Seltenerd-Aktivator, ausgewählt aus der Gruppe bestehend aus $Eu_2O_3$, $Nd_2O_3$, $Yb_2O_3$, $Dy_2O_3$, $Tb_2O_3$ und $Pr_2O_3$, und zwischen 0,1 bis 2 Molprozent jeweils aus zumindest einem Nachleuchtabschwächer, ausgewählt aus der Gruppe bestehend aus CaO und SrO, besteht, wobei der Rest $Y_2O_3$ ist.

3. Polykristalliner keramischer Szintillator, dadurch gekennzeichnet, daß er im wesentlichen aus zwischen 5 und 50 Molprozent $Gd_2O_3$, 0,5 bis 12 Molprozent $Eu_2O_3$ und 0,1 und 2 Molprozent $Yb_2O_3$ besteht, wobei der Rest $Y_2O_3$ ist.

4. Polykristalliner keramischer Szintillator nach einem der Ansprüche 1 bis 3, dadurch gekennzeichnet, daß der Seltenerdoxid - Aktivator im wesentlichen aus zwischen 1 und 6 Molprozent $Eu_2O_3$ besteht.

5. Polykristalliner keramischer Szintillator nach einem der Ansprüche 1 bis 3, dadurch gekennzeichnet, daß der Seltenerdoxid - Aktivator im wesentlichen aus zwischen 20 und 40 Molprozent $Gd_2O_3$ besteht.

6. Polykristalliner keramischer Szintillator nach einem der Ansprüche 1 oder 2, dadurch gekennzeichnet, daß der Seltenerdoxid - Aktivator im wesentlichen aus zwischen 0,05 und 1,5 Molprozent $Nd_2O_3$ besteht.

7. Polykristalliner keramischer Szintillator nach Anspruch 6, dadurch gekennzeichnet, daß der Seltenerdoxid - Aktivator im wesentlichen aus zwischen 0,1 und 0,5 Molprozent $Nd_2O_3$ besteht.

8. Polykristalliner keramischer Szintillator nach einem der Ansprüche 1 oder 2, dadurch gekennzeichnet, daß der Seltenerdoxid - Aktivator im wesentlichen aus zwischen 0,5 und 3 Molprozent $Tb_2O_3$ besteht.

9. Polykristalliner keramischer Szintillator nach einem der Ansprüche 1 oder 2, dadurch gekennzeichnet, daß der Seltenerdoxid - Aktivator im wesentlichen aus zwischen 0,1 und 2 Molprozent $Yb_2O_3$ besteht.

10. Polykristalliner keramischer Szintillator nach Anspruch 9, dadurch gekennzeichnet, daß der Seltenerdoxid - Aktivator im wesentlichen aus zwischen 0,15 und 0,7 Molprozent $Yb_2O_3$ besteht.

11. Polykristalliner keramischer Szintillator nach einem der Ansprüche 1 oder 2, dadurch gekennzeichnet, daß der Seltenerdoxid - Aktivator im wesentlichen aus zwischen 0,03 und 1 Molprozent $Dy_2O_3$ besteht.

12. Polykristalliner keramischer Szintillator nach einem der Ansprüche 1 oder 2, dadurch gekennzeichnet, daß der Seltenerdoxid - Aktivator im wesentlichen aus zwischen 0,02 und 0,05 Molprozent $Pr_2O_3$ besteht.

13. Verfahren zur Herstellung eines polykristallinen keramischen Szintillatorkörpers, dadurch gekennzeichnet, daß es die Stufen des Herstellens eines Multikomponenten - Pulvers, enthaltend zwischen 5 und 50 Molprozent $Gd_2O_3$ und zwischen 0,02 und 12 Molprozent von zumindest einem Seltenerdoxid - Aktivator, ausgewählt aus der Gruppe bestehend aus $Eu_2O_3$, $Nd_2O_3$, $Yb_2O_3$, $Dy_2O_3$, $Tb_2O_3$ und $Pr_2O_3$, wobei der Rest des Multikomponenten - Pulvers $Y_2O_3$ ist, des Kaltpressens des Multikomponenten - Pulvers zur Herstellung eines Pulver-Preßlings, und des Sinterns des Pulver-Preßlings zur Herstellung des polykristallinen keramischen Szintillatorkörpers, umfaßt.

14. Verfahren zur Herstellung eines polykristallinen keramischen Szintillatorkörpers, dadurch gekennzeichnet, daß es die Stufen des Herstellens eines Multikomponenten - Pulvers, enthaltend zwischen 5 und 50 Molprozent $Gd_2O_3$ und zwischen 0,02 und 12 Molprozent von zumindest einem Seltenerdoxid - Aktivator, ausgewählt aus der Gruppe bestehend aus $Eu_2O_3$, $Nd_2O_3$, $Yb_2O_3$, $Dy_2O_3$, $Tb_2O_3$ und $Pr_2O_3$, wobei der Rest des Multikomponenten - Pulvers $Y_2O_3$ ist, des Verpressens des Multikomponenten - Pulvers zur Herstellung eines Pulver-Preßlings, des Sinterns des Pulver-Preßlings zu einer geschlossenen Porositätsstufe, und des Verpressens des gesinterten Pulver-Preßlings mittels des GHIP-Verfahrens (gas hot isostatic process) zur Herstellung des polykristallinen keramischen Szintillatorkörpers, umfaßt.

15. Verfahren zur Herstellung eines polykristallinen keramischen Szintillatorkörpers, dadurch gekennzeichnet, daß es die Stufen des Herstellens eines Multikomponenten - Pulvers, enthaltend zwischen 5 und 50 Molprozent $Gd_2O_3$ und zwischen 0,02 und 12 Molprozent von zumindest einem Seltenerdoxid - Aktivator, ausgewählt aus der Gruppe bestehend aus $Eu_2O_3$, $Nd_2O_3$, $Yb_2O_3$, $Dy_2O_3$, $Tb_2O_3$ und $Pr_2O_3$, wobei der Rest des Multikomponenten - Pulvers $Y_2O_3$ ist, des Verpressens des Multikomponenten - Pulvers unter Vakuum bei einer ersten Temperatur während eines ersten vorherbestimmten Zeitraums, und des Erhöhens der ersten Temperatur und des Drucks auf eine zweite Temperatur und Druck und Aufrechterhalten der zweiten Temperatur und des Drucks während eines zweiten Zeitraums zur Herstellung des polykristallinen keramischen Szintillatorkörpers, umfaßt.

16. Verfahren nach einem der Ansprüche 13 bis 15, dadurch gekennzeichnet, daß das Multikomponenten - Pulver zwischen 20 und 40 Molprozent $Gd_2O_3$ enthält.

17. Verfahren nach einem der Ansprüche 13 bis 15, dadurch gekennzeichnet, daß das Multikomponenten - Pulver zwischen 1 und 6 Molprozent $Eu_2O_3$ enthält.

18. Verfahren nach einem der Ansprüche 13 bis 15, dadurch gekennzeichnet, daß das Multikomponenten - Pulver zwischen 0,1 und 2 Molprozent $Yb_2O_3$ enthält.

19. Verfahren nach einem der Ansprüche 13 bis 15, dadurch gekennzeichnet, daß das Multikomponenten - Pulver zwischen 20 und 40 Molprozent $Gd_2O_3$, zwischen 1 und 6 Molprozent $Eu_2O_3$, zwischen 0,1 und 2 Molprozent $Yb_2O_3$ enthält, wobei der Rest $Y_2O_3$ ist.

20. Verfahren nach einem der Ansprüche 13 bis 15, dadurch gekennzeichnet, daß das Multikomponenten - Pulver zwischen 0,05 und 1,5 Molprozent $Nd_2O_3$ enthält.

21. Verfahren nach einem der Ansprüche 13 bis 15, dadurch gekennzeichnet, daß das Multikomponenten - Pulver zwischen 0,05 und 3 Molprozent $Tb_2O_3$ enthält.

22. Verfahren nach einem der Ansprüche 13 bis 15, dadurch gekennzeichnet, daß das Multikomponenten - Pulver zwischen 0,03 und 1 Molprozent $Dy_2O_3$ enthält.

23. Verfahren nach einem der Ansprüche 13 bis 15, dadurch gekennzeichnet daß das Multikomponenten - Pulver zwischen 0,02 und 0,05 Molprozent $Pr_2O_3$ enthält.

24. Verfahren nach einem der Ansprüche 13 bis 15, dadurch gekennzeichnet, daß das Multikomponenten - Pulver zwischen 0,1 und 2 Molprozent SrO oder CaO enthält.

25. Verfahren nach einem der Ansprüche 13 bis 15, dadurch gekennzeichnet, daß die Stufe des Herstellens des Multikomponenten - Pulvers das Mischen von hochreinen Mikrometer - zu - Submikrometer - Pulvern von $Gd_2O_3$, $Y_2O_3$ und zumindest einem der Seltenerdoxid - Aktivatoren, umfaßt.

26. Verfahren nach einem der Ansprüche 13 bis 15, dadurch gekennzeichnet, daß die Stufe des Herstellens des Multikomponenten - Pulvers die Stufen

des gemeinsamen Ausfällens der Oxalate von Y, Gd und zumindest eines der Seltenerdoxid - Aktivatoren durch das chemische Naß-Oxalatverfahren und

des Calcinierens der Oxalate zur Gewinnung der entsprechenden Oxide, umfaßt.

27. Verfahren nach einem der Ansprüche 13 bis 15, dadurch gekennzeichnet, daß die Stufe des Calcinierens die Stufe des Erhitzens der Oxalate an der Luft bei einer Temperatur von zwischen 700°C und 900°C während eines Zeitraums von zwischen 1 Stunde und 4 Stunden, umfaßt.

28. Verfahren nach Anspruch 26, dadurch gekennzeichnet, daß der Stufe des Calcinierens die Stufe des Mahlens der Oxalate vorausgeht.

29. Verfahren nach einem der Ansprüche 26 oder 28, dadurch gekennzeichnet, daß es die Stufe des Malhens der in der Calcinierungsstufe erhaltenen Oxide umfaßt.

30. Verfahren nach einem der Ansprüche 13, 25 oder 26, dadurch gekennzeichnet, daß die Stufe des Kaltpressens die Stufe des Formstanzens des Multikomponenten - Pulvers bei einem Druck von zwischen 2,068 daN/mm² (3000 psi) und 10,34 daN/mm² (15 000 psi), umfaßt.

31. Verfahren nach Anspruch 30, dadurch gekennzeichnet, daß die Stufe des Kaltpressens ferner die Stufe des isostatischen Pressens des formgepreßten Multikomponenten - Pulvers bei einem Druck von zwischen 6,89 daN/mm² (10 000 psi) und 41,36 daN/mm² (60 000 psi) zur weiteren Erhöhung der Gründichte und der Gleichmäßigkeit des Pulverpreßlings, umfaßt.

32. Verfahren nach Anspruch 31, dadurch gekennzeichnet, daß die Sinterstufe die Stufen

des Erhitzens des Pulverpreßlings bei einer Geschwindigkeit von zwischen 100°C pro Stunde und 700°C pro Stunde auf eine Sintertemperatur von zwischen 1800°C und 2100°C, und

des Haltens der Sintertemperatur während eines Zeitraums zwischen 1 und 30 Stunden, umfaßt.

33. Verfahren nach Anspruch 31, dadurch gekennzeichnet, daß die Sinterstufe die Stufen

des Erhitzens des Pulverpreßlings bei einer Geschwindigkeit von zwischen 300°C/h und 400°C/h bis auf eine Haltetemperatur von zwischen 1600°C und 1700°C.

des Aufrechterhaltens der Haltetemperatur während eines Zeitraums zwischen 1 und 20 Stunden und des anschließenden Erhöhens der Temperatur mit einer Geschwindigkeit von zwischen 25°C/h und 75°C/h bis auf eine End-Sintertemperatur von zwischen 1800°C und 2100°C, und

des Haltens der End-Sintertemperatur während eines Zeitraums von zwischen 1 und 10 Stunden, umfaßt.

34. Verfahren nach Anspruch 31, dadurch gekennzeichnet, daß die Stufe des Erhitzens das Erhitzen des Pulverpreßlings im Vakuum oder in einer reduzierenden Atmosphäre, umfaßt.

35. Verfahren nach Anspruch 31, dadurch gekennzeichnet, daß es die Stufe des Abkühlens des erhaltenen polykristallinen keramischen Szintillatorkörpers auf Raumtemperatur während eines Zeitraums von zwischen 2 und 10 Stunden, umfaßt.

36. Verfahren nach einem der Ansprüche 14, 25 oder 26, dadurch gekennzeichnet, daß die Stufe des Presens zur Herstellung des Pulverpreßlings die Stufen

des Kaltpressens des Multikomponenten-Pulvers bei einem Druck von zwischen 2,068 daN/mm² (3000 psi) und 6,89 daN/mm² (10 000 psi) zur Herstellung eines vorläufigen Pulverpreßlings, und anschließend

des isostatischen Pressens des vorläufigen Pulverpreßlings bei einem Druck von zwischen 10,34 daN/mm² (15 000 psi) und 41,36 daN/mm² (60 000 psi) zur Erhöhung der Gründichte desselben, umfaßt.

37. Verfahren nach Anspruch 36, dadurch gekennzeichnet, daß die Sinterstufe das Erhitzen des Pulverpreßlings bei einer Temperatur von zwischen 1500°C und 1700°C während eines Zeitraums von zwischen 1 und 10 Stunden, umfaßt.

38. Verfahren nach Anspruch 37, dadurch gekennzeichnet, daß die Stufe des Pressens des Sinterpulver - Preßlings nach dem GHIP-Verfahren die Stufe des Erhitzens bie einer Temperatur von zwischen 1500°C und 1800°C während eines Zeitraums von zwischen 1 und 2 Stunden bei einem Argongas-Druck von zwischen 0,689 daN/mm² (1000 psi) und 20,68 daN/mm² (30 000 psi), umfaßt.

39. Verfahren nach Anspruch 38, dadurch gekennzeichnet, daß die Stufe des Pressens des Sinterkörper - Preßlings nach dem GHIP-Verfahren mehr im einzelnen die Stufen

des Erhitzens des Pulverpreßlings während 1 Stunde zur Erhöhung der Temperatur desselben auf 1400°C, des Fortsetzens des Erhitzens des Pulverpreßlings während einer zusätzlichen Stunde zur Erhöhung der Temperatur desselben auf 1750°C und anschließend

des Haltens der Temperatur des Pulverpreßlings auf Raumtemperatur, umfaßt, wobei die Stufen des Erhitzens und des Aufrechterhaltens der Temperatur bei einem Argongas-Druck von 17,23 daN/mm² (25 000 psi) durchgeführt werden.

40. Verfahren nach einem der Ansprüche 15, 25 oder 26, dadurch gekennzeichnet, daß die Stufe des Pressens die Stufe des Pressens des Multikomponenten - Pulvers bei einem Druck von zwischen 0,689 daN/mm² (1000 psi) und 0,827 daN/mm² (1200 psi) bei einer Temperatur von zwischen 600°C und 700°C unter einem Vakuum von bis zu 200 Mikrometer während 1 Stunde umfaßt.

41. Verfahren nach Anspruch 40, dadurch gekennzeichnet, daß die Stufe des Erhöhens der ersten Temperatur und des Drucks die Erhöhung der Temperatur auf zwischen 1300°C und 1600°C, des Erhöhens des drucks auf zwischen 2,75 daN/mm² (4000 psi) und 6,89 daN/mm² (10 000 psi) und das Aufrechterhalten der erhöhten Temperatur und des Drucks während eines Zeitraums von zwischen 1/2 Stunde bis 4 Stunden, umfaßt.

42. Verfahren nach Anspruch 41, dadurch gekennzeichnet, daß es die Stufe des Oxidierens des erhaltenen heißverpreßten keramischen Körpers umfaßt, wobei die Stufe des Oxidierens das Erhitzen des keramischen Körpers in einer Sauerstoff enthaltenden Atmosphäre während eines Zeitraums von zwischen 1 und 20 Stunden bei einer Temperatur von zwischen 800°C und 1200°C einschließt, um irgendeine Verfärbung zu beseitigen.

**Revendications**

1. Scintillator en céramique polycristalline consistant essentiellement entre 5 moles pourcent et 50 moles pourcent de $Gd_2O_3$, et entre 0,02 et 12 moles pourcent d'au moins un activateur en oxyde de terre-rare choisi dans le groupe constitué par $Eu_2O_3$, $Nd_2O_3$, $Yb_2O_3$, $Dy_2O_3$, $Tb_2O_3$, et $Pr_2O_3$, le reste étant $Y_2O_3$.

2. Scintillateur en céramique polycristalline comprenant entre 5 et 50 moles pourcent de $Gd_2O_3$, entre 0,02 et 12 moles pourcent d'au moins un activateur en terrerare choisi dans le groupe constitué par $Eu_2O_3$, $Nd_2O_3$, $Yb_2O_3$, $Dy_2O_3$, $Tb_2O_3$, et $Pr_2O_3$, et entre 0,1 et 2 moles pourcent chacun d'au moins un réducteur de post-luminescence choisi dans le groupe constitué par CaO et SrO, le reste étant $Y_2O_3$.

3. Scintillateur en céramique polycristalline consistant essentiellement entre 5 et 50 moles pourcent de $Gd_2O_3$, 0,5 à 12 moles pourcent de $Eu_2O_3$, et 0,1 et 2 moles pourcent de $Yb_2O_3$, le reste étant $Y_2O_3$.

4. Scintillateur en céramique polycristalline selon l'une quelconque des revendications 1 à 3 dans lequel ledit activateur en oxyde de terre-rare consiste essentiellement entre 1 et 6 moles pourcent de $Eu_2O_3$.

5. Scintillateur en céramique polycristalline selon l'une quelconque des revendications 1 à 3 dans lequel ledit activateur en oxyde de terre-rare consiste essentiellement entre 20 et 40 moles pourcent de $Gd_2O_3$.

6. Scintillateur en céramique polycrystalline selon la revendication 1 ou 2 dans lequel l'activateur en oxyde de terre-rate consiste essentiellement entre 0,05 et 1,5 mole pourcent de $Nd_2O_3$.

7. Scintillateur en céramique polycristalline selon la revendication 6 dans lequel l'activateur en oxyde de terre-rare consiste essentiellement entre 0,1 et 0,5 mole pourcent de $Nd_2O_3$.

8. Scintillateur en céramique polycristalline selon la revendication 1 ou 2 dans lequel l'activateur en oxyde de terre-rare consiste essentiellement entre 0,5 et 3 moles pourcent de $Tb_2O_3$.

9. Scintillateur en céramique polycristalline selon la revendication 1 ou 2 dans lequel l'activateur en oxyde de terre-rare consiste essentiellement entre 0,1 et 2 moles pourcent de $Yb_2O_3$.

10. Scintillateur en céramique polycristalline selon la revendication 9 dans lequel l'activateur en oxyde de terre-rare consiste essentiellement entre 0,15 et 0,7 mole pourcent de $Yb_2O_3$.

11. Scintillateur en céramique polycristalline selon la revendication 1 ou 2 dans lequel l'activateur en oxyde de terre-rate consiste essentiellement entre 0,03 et 1 mole pourcent de $Dy_2O_3$.

12. Scintillateur en céramique polycristalline selon la revendication 1 ou 2 dans lequel l'activateur en oxyde de terre-rate consiste essentiellement entre 0,02 et 0,05 mole pourcent de $Pr_2O_3$.

13. Méthode de préparation d'un corps de scintillateur en céramique polycristalline comprenant les étapes de:
préparation d'une poudre à composants multiples incluant entre 5 et 50 moles pourcent de $Gd_2O_3$ et entre 0,02 et 12 moles pourcent d'au moins un activaterur en oxyde de terre-rare choisi dans le groupe constitué par $Eu_2O_3$, $Nd_2O_3$, $Yb_2O_3$, $Dy_2O_3$, $Tb_2O_3$, et $Pr_2O_3$, le reste de cette poudre à composants multiples étant $Y_2O_3$.
pressage à froid de cette poudre à composants multiples pour former un comprimé de poudre; et
frittage du comprimé de poudre pour former le corps de scintillateur en céramique polycristalline.

14. Méthode de préparation d'un corps de scintillateur en céramique polycristalline comprenant les étapes de:
préparation d'une poudre à composants multiples incluant entre 5 et 50 moles pourcent de $Gd_2O_3$ et entre 0,02 et 12 moles pourcent d'au moins un activateur en oxyde de terre-rare choisi dans le groupe constitué par $Eu_2O_3$, $Nd_2O_3$, $Yb_2O_3$, $Dy_2O_3$, $Tb_2O_3$, et $Pr_2O_3$, le reste de cette poudre à composants multiples étant $Y_2O_3$.
pressage à froid de cette poudre à composants multiples pour former un comprimé de poudre; et
frittage du comprimé de poudre jusqu'à un état de porosité fermée; et
pressage du comprimé de poudre fritté par le procédé isostatique à gaz chaud pour former le corps de scintillateur en céramique polycristalline.

15. Méthode de préparation d'un corps de scintillateur en céramique polycristalline comprenant les étapes de:

préparation d'une poudre à composants multiples incluant entre 5 et 50 moles pourcent de $Gd_2O_3$ et entre 0,02 et 12 moles pourcent d'au moins un activateur en oxyde de terre-rare choisi dans le groupe constitué par $Eu_2O_3$, $Nd_2O_3$, $Yb_2O_3$, $Dy_2O_3$, $Tb_2O_3$, et $Pr_2O_3$, le reste de cette poudre à composants multiples étant $Y_2O_3$;

pressage de cette poudre à composants multiples sous vide à une première température et pression pendant une première période de temps prédéterminée; et

accroissement de cette première température et pression à une seconde température et pression et maintien de cette seconde température et pression pendant une seconde période de temps pour former le corps de scintillateur en céramique polycristalline.

16. Méthode selon l'une quelconque des revendications 13 à 15 dans laquelle la poudre à composants multiples comprend entre 20 et 40 moles pourcent de $Gd_2O_3$.

17. Méthode selon l'une quelconque des revendications 13 à 15 dans laquelle la poudre à composants multiples comprend entre 1 et 6 moles pourcent de $Eu_2O_3$.

18. Méthode selon l'une quelconque des revendications 13 à 15 dans laquelle la poudre à composants multiples comprend entre 0,1 et 2 moles pourcent de $Yb_2O_3$.

19. Méthode selon l'une quelconque des revendications 13 à 15 dans laquelle la poudre à composants multiples comprend entre 20 et 40 moles pourcent de $Gd_2O_3$, entre 1 et 6 moles pourcent de $Eu_2O_3$, entre 0,1 et 2 moles pourcent de $Yb_2O_3$, le reste étant $Y_2O_3$.

20. Méthode selon l'une quelconque des revendications 13 à 15 dans laquelle la poudre à composants multiples comprend entre 0,05 et 1,5 moles pourcent de $Nd_2O_3$.

21. Méthode selon l'une quelconque des revendications 13 à 15 dans laquelle la poudre à composants multiples comprend entre 0,05 et 3 moles pourcent de $Tb_2O_3$.

22. Méthode selon l'une quelconque des revendications 13 à 15 dans laquelle la poudre à composants multiples comprend entre 0,03 et 1 mole pourcent de $Dy_2O_3$.

23. Méthode selon l'une quelconque des revendications 13 à 15 dans laquelle la poudre à composants multiples comprend entre 0,02 et 0,05 mole pourcent de $Pr_2O_3$.

24. Méthode selon l'une quelconque des revendications 13 à 15 dans laquelle la poudre à composants multiples comprend entre 0,1 et 2 moles pourcent de SrO ou CaO.

25. Méthode selon l'une quelconque des revendications 13 à 15 dans laquelle l'étape de préparation de la poudre à composants multiples comprend le mélange de poudres micrométriques à sous micrométriques de haute pureté de $Gd_2O_3$, $Y_2O_3$ et au moins un des activateurs en oxyde de terre-rare.

26. Méthode selon l'une quelconque des revendications 13 à 15 dans laquelle l'étape de préparation de la poudre à composants multiples comprend les étapes de:

coprécipitation par le procédé chimique par voie humide des oxalates de Y, Gd, et au moins un des activateurs en terre-rare: et

calcination des ces oxalates afin d'obtenir les oxydes correspondants.

27. Méthode selon l'une quelconque des revendications 13 à 15 dans laquelle l'étape de calcination comprend l'étape de chauffage desdits oxalates dans l'air à une température de 700°C à 900°C pendant 1 à 4 heures.

28. Méthode selon la revendication 26 dans laquelle l'étape de calcination est précédée par l'étape de broyage des oxolates.

29. Méthode selon l'une quelconque des revendications 26 ou 28 qui comprend en outre l'étape de broyage des oxydes obtenus dans l'étape de calcination.

30. Méthode selon l'une quelconque des revendications 13, 25 ou 26 dans laquelle l'étape de pressage à froid comprend l'étape de pressage en matrice de la poudre à composants multiples à une pression de 2,068 daN/mm². (3000 psi) à 10,34 daN/mm² (15000 psi).

31. Méthode selon la revendication 30 dans laquelle l'étape de pressage à froid comprend en outre l'étape de pressage isostatique de la poudre à composants multiples pressée en matrice à une pression entre 6,89 daN/mm² (10000 psi) et 41,36 daN/mm² (60000 psi) pour encore accroître la densité à vert et l'uniformité dudit comprimé de poudre.

32. Méthode selon la revendication 31 dans laquelle l'étape de frittage comprend les étapes de:

chauffage du comprimé de poudre à une vitesse de 100°C par heure à 700°C par heure à une température de frittage entre 1800°C et 2100°C; et

maintien de cette température de frittage entre 1 et 30 heures.

33. Méthode selon la revendication 31 dans laquelle l'étape de frittage comprend les étapes de:

chauffage du comprimé de poudre à une vitesse entre 300°C/h et 400°C/h jusqu'à une température entre 1600°C et 1700°C;

maintien de cette température de 1 à 20 heures et ensuite accroissement de la température à une vitesse entre 25°C/h et 75°C/h jusqu'à une température finale de frittage entre 1800°C et 2100°C; et

maintien de cette température finale de frittage pendant 1 à 10 heures.

34. Méthode selon la revendication 31 dans laquelle l'étape de chauffage comprend le chauffage du comprimé de poudre sous vide ou dans une atmosphère réductrice.

35. Méthode selon la revendication 31 comprenant en outre l'étape de refroidissement du corps de scintillateur en céramique polycristalline résultant jusqu'à la température ambiante sur une période comprise entre 2 et 10 heures.

36. Méthode selon l'une quelconque des revendications 14, 25 ou 26 dans laquelle l'étape de pressage pour former le comprimé de poudre comprend les étapes de:

pressage à froid de la poudre à composants multiples à une pression comprise entre 2,068 daN/mm² (3000 psi) et 6,89 daN/mm² (10000 psi) pour former un comprimé préliminaire de poudre; et ensuite

pressage isostatique du comprimé préliminaire de poudre à une pression comprise entre 10,34 daN/mm² (15000 psi) et 41,36 daN/mm² (60 000 psi) pour en accroître la masse volumique à vert.

37. Méthode selon la revendication 36 dans laquelle l'étape de frittage comprend le chauffage du comprimé de poudre à une température comprise entre 1500°C et 1700°C pendant 1 à 10 heures.

38. Méthode selon la revendication 37 dans laquelle l'étape de pressage du comprimé fritté de poudre par le procédé isostatique au gaz chaud comprend l'étape de chauffage à une température comprise entre 1500°C et 1800°C pendant 1 à 2 heures à une pression de gaz argon comprise entre 0,689 daN/mm² (1000 psi) et 20,68 daN/mm² (30000 psi).

39. Méthode selon la revendication 38 dans laquelle l'étape de pressage du comprimé fritté de poudre par le procédé isostatique au gaz chaud comprend plus particulièrement les étapes de:

chauffage du comprimé de poudre pendant une heure pour en élever la température jusqu'à 1400°C, poursuite du chauffage du comprimé de poudre pendant une heure supplémentaire pour en élever la température jusqu'à 1750°C; et ensuite

maintien de la température de ce comprimé de poudre pendant 1 heure à 1750°C avant le refroidissement au four du comprimé de poudre jusqu'à la température ambiante, ces étapes de chauffage et de maintien de température étant effectuée à une pression de gas argon de 17,23 daN/mm² (25000 psi).

40. Méthode selon l'une quelconque des revendications 15, 25 et 26 dans laquelle l'étape de pressage comprend l'étape de pressage de la poudre à composants multiples à une pression comprise entre 0,689 daN/mm² (1000 psi) et 0,827 daN/mm² (1200 psi) à une température comprise entre 600°C et 700°C sous une vide de 200 micromètres pendant 1 heure.

41. Méthode selon la revendication 40 dans laquelle l'étape d'accroissement de la première température et pression comprend l'accroissement de la température entre 1300°C et 1600°C, l'accroissement de la pression entre 2,75 daN/mm² (4000 psi) et 6,89 daN/mm² (10000 psi), et le maintien de cette température et cette pression accrue pendant une demi heure à 4 heures.

42. Méthode selon la revendication 41 comprenant en outre l'étape d'oxydation de la céramique pressée à chaud résultante, cette étape d'oxydation incluant le chauffage de la céramique dans une atmosphère contenant de l'oxygène pendant 1 à 20 heures à une température comprise entre 800°C et 1200°C pour ôter toute coloration.

FIG. 1

MOLE PERCENT OF ThO$_2$

## FIG. 2

RELATIVE LIGHT OUTPUT

MOLE PERCENT OF $Eu_2O_3$

FIG. 3a

## *FIG. 3b*

FIG. 4

# *FIG. 5*

RELATIVE LIGHT OUTPUT

MOLE PERCENT Yb$_2$O$_3$

6

FIG. 6